# EUROPÄISCHE PATENTSCHRIFT

(11) **EP 1 462 770 B1**
(45) Veröffentlichungstag und Bekanntmachung des Hinweises auf die Patenterteilung: **24.12.2008**
(21) Anmeldenummer: 04002012.5
(22) Anmeldetag: 30.01.2004
(51) Int. Cl.: G01D 5/14

(54) **Offset-reduzierter Hall-Sensor**
Offset compensated Hall-sensor
Capteur de Hall avec décalage compensé

(30) Priorität: 26.03.2003 DE 10313642
(43) Veröffentlichungstag der Anmeldung: 29.09.2004
(73) Patentinhaber: Micronas GmbH, 79108 Freiburg i. Br. (DE)
(72) Erfinder: Blossfeld, Lothar, 79874 Breitnau (DE)
(74) Vertreter: Patentanwälte Westphal, Mussgnug & Partner

(56) Entgegenhaltungen:
- EP-A1- 0 548 391
- RONALD GAMPP: "CMOS Hall-Sensoren" AUTO & ELEKTRONIK, Bd. 4, Nr. 2000, April 2000 (2000-04), Seiten 19-23, XP002459279 DEHUETHIG, HEIDELBERG

## Beschreibung

Die Erfindung bezieht sich auf ein Verfahren zum Bestimmen einer Offset-reduzierten Hall-Spannung mit den oberbegrifflichen Merkmalen des Patentanspruchs 1 bzw. einen Offset-kompensierten Hall-Sensor mit den oberbegrifflichen Merkmalen des Patentanspruchs 8.

Aus "Auto & Elektronik 4/2000", Seiten 19-23, ist ein Hall-Sensor bekannt, der neben dem eigentlichen Hall-Sensor-Element ein komplettes integriertes System aufweist. Der Einsatzbereich ist für den Spannungsbereich von 100µV-1mV bei Magnetfeldstärken von 2 - 20mT ausgelegt. Daher sind derartige Hall-Sensoren sehr anfällig für Offset-Driften, die infolge von wechselnden Temperaturen und Spannungsschwankungen auftreten können, aber auch durch mechanischen Stress, den z. B. das Gehäuse auf den Chip überträgt und andere Faktoren auftreten können. Zur Reduzierung des Offsets ist ein sogenanntes Chopper-Verfahren angegeben, das auch als "Zero-Drift"-Prinzip bekannt ist. Bei diesem Verfahren wird die Stromrichtung des Hall-Stroms durch die Hall-Platte, die das eigentliche Sensorelement ausbildet, laufend umgeschaltet. Verfälschungen im Messsignal, die beispielsweise aufgrund geometrischer Verzerrungen der Hall-Platte entstehen, gehen unabhängig von der Stromrichtung in gleicher Stärke in den Messwert ein, werden jedoch in Abhängigkeit von der Stromrichtung entweder hinzuaddiert oder abgezogen. Da beide Messungen über identische Strukturen mit demselben Stressprofil durchgeführt werden, mittelt sich der über die mechanischen Gehäusespannungen hervorgerufene Offset aus. Im Fall der Addition der durch die beiden mit verschiedenen Stromflussrichtungen ermittelten Hall-Spannungen zeigt ein Wechselspannungsanteil den Offset, während die Gleichspannung die Offset-kompensierte Hall-Spannung anzeigt. Im Fall der Subtraktion gilt das Umgekehrte.

Derartige vertikale Hall-Sensoren, bei denen auf der Oberfläche des Hall-Sensor-Elements Abgriffe zum Ein- und Ausspeisen des Hall-Sensor-Stroms und zum Bestimmen der Hall-Spannung angeordnet sind, werden vorwiegend zur Messung von Magnetflüssen parallel zu einer planaren Kristalloberfläche verwendet. Dadurch können zwei orthogonale Feldvektoren mit einem Chip gemessen werden. Derartige Verfahren werden in Positionsgebern oder Drehgebern angewendet. Die Eigenschaften bisher bekannter vertikaler Sensoren sind durch die Offset-Spannungen jedoch sehr ungenau und entziehen sich daher vielen möglichen Anwendungen.

EP-A-0548391 offenbart einen offsetkompensierten Hallsensor.

Die Aufgabe der Erfindung besteht darin, einen Hall-Sensor bzw. ein Verfahren zum Bestimmen einer Offset-reduzierten Hall-Spannung vorzuschlagen, die eine weitere Reduzierung der Offset-Spannungen ermöglichen.

Diese Aufgabe wird durch ein Verfahren zum Bestimmen einer Offset-reduzierten Hall-Spannung und/oder einer Offset-Spannung mit den Merkmalen des Patentanspruchs 1 bzw. einen Offset-Sensor mit den Merkmalen des Patentanspruchs 8 gelöst.

Ausgegangen wird dabei von einem Verfahren zum Bestimmen einer Offset-reduzierten Hall-Spannung und/oder einer Offset-Spannung eines Hall-Sensors mit den Schritten:
Anlegen eines Hall-Sensor-Stroms an einen ersten und an zweite Abgriffe des Hall-Sensors und Bestimmen einer ersten Hall-Spannung an zu den ersten und zweiten Abgriffen beabstandeten dritten und vierten Abgriffen, Anlegen eines demgegenüber veränderten zweiten Hall-Sensor-Stroms und Bestimmen einer zweiten Hall-Spannung und Ermitteln der Hall-Spannung und/oder des Hall-Spannungs-Offsets aus der ersten und der zweiten bestimmten Hall-Spannung.

Vorteilhafterweise wird der verbleibende Offset beseitigt durch das Anlegen des zweiten Hall-Stroms an räumlich zu den ersten und/oder zweiten Abgriffen versetzten Abgriffen.

Vorrichtungsgemäß wird bevorzugt ein Offset-kompensierter Hall-Sensor mit Abgriffen zum Abgreifen oder Anlegen von Spannungen und/oder Strömen und einer Steuereinrichtung zum Anlegen eines ersten Hall-Sensor-Stroms über einen ersten zentralen Abgriff und zwei dazu beabstandete Abgriffe und zum Abgreifen einer ersten Hall-Spannung beiderseits des ersten Abgriffs über einen dritten und einen vierten Abgriff, die zwischen dem ersten Abgriff und den zweiten Abgriffen angeordnet sind, in einer ersten Messanordnung. Die Offset-Kompensierung wird dadurch erzielt, dass die Steuereinrichtung eine Schalteinrichtung zum Anlegen eines zweiten Hall-Sensor-Stroms oder eines gleichen Hall-Sensor-Stroms an gegenüber dem ersten, zweiten und weiteren zweiten Abgriff räumlich versetzten Abgriffen und zum Abgreifen einer zweiten Hall-Spannung an gegenüber den dritten und vierten Abgriffen räumlich versetzten Abgriffen in einer zweiten Messanordnung aufweist.

Durch das räumlich versetzte Abgreifen werden Teile des eigentlichen Hall-Elementes bzw. Hall-Sensors bei den beiden verschiedenen Messungen in verschiedenen Stromrichtungen durchlaufen. Dies ermöglicht eine Kompensation des Offsets bei der gemeinsamen Verarbeitung der beiden erhaltenen Hall-Ströme. Je nach Rechenaufwand können dabei jeweils gleiche Hall-Ströme oder verschiedene Hall-Ströme für die beiden Messungen verwendet werden.

Vorteilhafte Ausgestaltungen sind Gegenstand abhängiger Ansprüche.

Zweckmäßigerweise wird nicht nur die Position der Stromspeisungspunkte räumlich versetzt sondern auch die Position der Abgriffe zum Abgreifen der Hall-Spannung. Bei der einfachsten Anordnung, die besonders bevorzugt wird, werden bei der ersten Messung die vorhandenen fünf Abgriffe, von denen die beiden Äußeren zusammen geschlossen sind, zum Einspeisen bzw. Ausspeisen des Hall-Sensor-Stroms bzw. zum Abgreifen der Hall-Spannung mit Offset verwendet. Bei der zweiten Messung werden dann einfach die Anschlüsse für Stromein- und -ausspeisung einerseits und zum Abgreifen der Hall-Spannung andererseits vertauscht. Dadurch kann durch eine einfache Umschaltung der Anschlüsse, die mit einem mechanischen oder elektronischen Schalter durchgeführt werden kann, eine Stromflusssituation erzeugt werden, wie sie in einer für sich bekannten Brückenschaltung vorliegt. Besonders vorteilhaft kann dabei auch das nochmalige Versetzen in einer zweiten Richtung bzw. im Fall der Brückenschaltung einfach das zusätzliche Umpolen des Stroms und nochmalige Durchführen beider Messungen ausgenutzt werden, so dass letztendlich vier einzelne Hall-Spannungen mit Offset bestimmt werden, die zur Kompensation des Offsets bzw. der Offset-Spannung und Ausgabe einer Offset-freien-Spannung verwendet werden.

Durch Addition der ersten und zweiten Offset-behafteten Hall-Spannung und anschließendes Dividieren durch zwei wird die reduzierte, insbesondere kompensierte Hall-Spannung bestimmbar. Durch Subtraktion der beiden Hall-Spannungen kann hingegen der Hall-Spannungs-Offset ermittelt werden.

Um auch ein innerhalb der Hall-Sensor-Ebene unter einem Winkel zur linearen Anordnung der Abgriffe verlaufendes Magnetfeld mit einem Winkel ≠ 90° bezüglich der Winkelkomponente bestimmen zu können, wird vorteilhafterweise eine kreuzweise aufgebaute Anordnung von Abgriffen auf der Oberfläche des Hall-Sensors bereitgestellt. Vorteilhafterweise kann dabei ein zentraler erster Abgriff als gemeinsamer zentraler Abgriff für die beiden orthogonal zueinander verlaufenden Abgriffsanordnungen in der Oberflächenebene des Hall-Sensor-Elements verwendet werden. Natürlich können auch noch weitere, insbesondere unter anderen Winkeln in der Oberflächenebene angeordnete Abgriffe eingesetzt werden, um mit möglichst geringem Rechenaufwand eine Winkelkomponente des Magnetfelds innerhalb der Ebene des Sensor-Elements zu bestimmen.

Für den Fall, dass eine räumliche Anordnung von Abgriffen, die dem zentralen Abgriff nahe liegen, nur in begrenzter Anzahl möglich ist, ist auch eine Interpolation durch die Durchführung entsprechend mehrerer Messungen mit verschiedenen Positionen von äußeren, mittleren und inneren Abgriffen möglich.

Ein Ausführungsbeispiel und Modifikationen davon werden nachfolgend anhand der Zeichnung näher erläutert. Es zeigen:
- Fig. 1: eine perspektivische Ansicht eines eigentlichen Hall-Sensor-Elements mit einer Vielzahl von Abgriffen auf dessen Oberfläche sowie Leitungen, die von den Abgriffen zu einer Schaltungsanordnung zum Beschalten der einzelnen Abgriffe sowie zum Ermitteln der Offset-freien Hall-Spannung geführt werden;
- Fig. 2A, 2B: schematisch ein Ersatzschaltbild für eine lineare Anordnung von Abgriffen in einer der Abgriffanordnung auf der Hall-Sensor-Oberfläche vergleichbaren Darstellung und in Darstellung einer Brückenschaltung;
- Fig. 2B - 2E: vier Darstellungen zur Veranschaulichung des Stromflusses durch eine solche Brückenanordnung bei verschiedenen Schaltstellungen;
- Fig. 3A, 3B: einen Längsschnitt durch einen Hall-Sensor mit dargestellten Abgriffen und den Spannungssituationen in den beiden verschiedenen Messanordnungen;
- Fig. 4A, 4B: in Draufsicht verschiedene Anordnungen für Abgriffe zur Bestimmung eines in der Hall-Sensor-Ebene schräg verlaufenden oder rotierenden Magnetfelds und
- Fig. 5A, 5B: eine weitere Ausführungsform mit einer weiteren Schicht auf der Unterseite des eigentlichen Hall-Sensors.

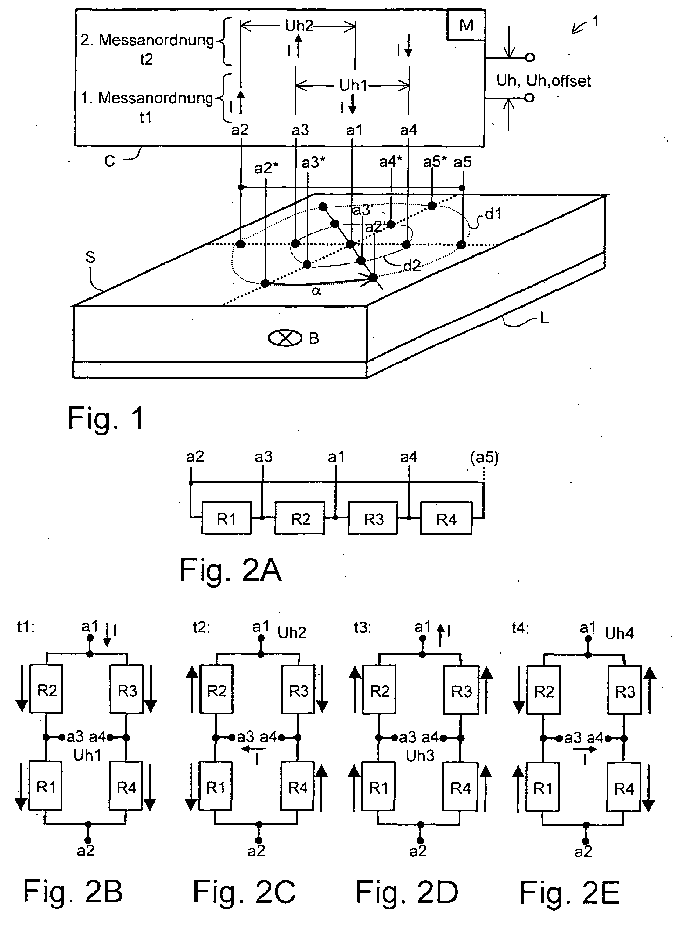

Fig. 1 stellt ein Ausführungsbeispiel für einen sogenannten vertikalen Hall-Sensor 1 dar. Vorzugsweise ist dieser integraler Bestandteil einer integrierten Schaltungsanordnung, welche neben einem eigentlichen Hall-Sensor-Element S auch eine Auswerteelektronik in Form einer Steuerschaltung C aufweist. Das eigentliche Hall-Sensor-Element S besteht aus einem flächigen Sensor-Plättchen, welches von einem Magnetfeld B durchströmt wird. Auf einer der flächigen Oberflächen des Hall-Sensor-Elements S ist eine Vielzahl von Abgriffen a1 - a5, a2^{*} - a5^{*}, a2', a3' angeordnet. Über diese Abgriffe findet durch das Anlegen einer entsprechenden Spannung eine Ein- bzw. Ausspeisung eines Hall-Sensor-Stroms I sowie das Abgreifen einer Hall-Spannung Uh1, Uh2 statt. Bei der dargestellten, besonders bevorzugten Ausführungsform ist auf der zu den Abgriffen a1, a2, ... gegenüberliegenden Oberfläche des Hall-Sensor-Elements S ein Träger- oder Abschlussmaterial, z. B. eine leitende Schicht L aufgebracht.

Die Steuerschaltung C dient dazu, im Rahmen einer ersten Messanordnung den Hall-Sensor-Strom I in den ersten, zentralen Abgriff a1 einzuspeisen und über zwei zu den beiden Seiten des zentralen Abgriffs A1 beabstandete Abgriffe a2, a5, welche als zweite Abgriffe dienen, auszuspeisen. Über jeden der beiden zweiten Abgriffe wird somit die Hälfte I/2 des eingespeisten Hall-Sensor-Stroms I aus dem Hall-Sensor-Element herausgeleitet. Die Hall-Spannung Uh1 wird an einem dritten und einem vierten Abgriff a3, a4 abgegriffen, wobei diese beiden Abgriffe sich beidseits des ersten, zentralen Abgriffs a1 auf der Strecke zu dem jeweils äußeren zweiten Abgriff a2, a5 befinden. Vorteilhafterweise sind die einzelnen Abgriffe a1 - a5 linear und äquidistant auf der Oberfläche des Hall-Sensor-Elements S angeordnet. Durch das Einspeisen des Hall-Sensor-Stroms I wird bei einem anliegenden Magnetfeld B dessen zum Stromverlauf bzw. der linearen Abgriffanordnung senkrechte Komponente in der Ebene des Hall-Sensor-Elements S durch das Induzieren einer entsprechenden Hall-Spannung und deren Abgreifen über den dritten und vierten Abgriff a3, a4 bestimmt.

Die Steuereinrichtung C sieht außerdem eine zweite Messanordnung vor, bei der die gleichen Abgriffe a1 - a5 zum Anlegen des Hall-Sensor-Stroms I und zum Abgreifen einer zweiten Hall-Spannung Uh2 verwendet werden. Jedoch werden dabei die einzelnen Abgriffe a1 - a5 anders als bei der ersten Messanordnung geschaltet. Die Stromein- und - ausspeisung findet über den vierten bzw. dritten Abgriff a4, a3 statt. Die zweite Hall-Spannung Uh2 wird an dem ersten und dem zweiten Abgriff a1, a2 abgegriffen. Zweckmäßigerweise sind, wie auch bei der Ausführung gemäß der ersten Messanordnung, die beiden zweiten Abgriffe a2, a5 mit einem gemeinsamen Anschluss an die Steuereinrichtung C angeschlossen bzw. miteinander kurzgeschlossen.

Die Steuereinrichtung C weist neben der Schalteinrichtung zum verschiedenartigen Beschalten des Hall-Sensor-Elements S und dessen Abgriffen a1 - a5 zum Bestimmen der verschiedenen ersten und zweiten Hall-Spannungen Uh1, Uh2 eine Logikeinrichtung auf, welche die beiden bestimmten Hall-Spannungen Uh1, Uh2 miteinander verarbeitet, um so eine Offset-kompensierte Hall-Spannung Uh und/oder eine Offset-Spannung Uh,offset zu bestimmen, um diese am Ausgang des Hall-Sensors 1 auszugeben.

Da die beiden Messanordnungen zu verschiedenen Zeitpunkten t1 bzw. t2 angesteuert werden, vorteilhafterweise mit einer hohen Schaltfrequenz in abwechselnder Reihenfolge, weist die Steuereinrichtung C auch einen Speicher M auf, in welchem jeweils zumindest eine der gemessenen Hall-Spannungen Uh1, Uh2 zeitweilig abgespeichert wird. Natürlich kann der Speicher M auch zum Abspeichern von weiteren Parametern und von für die Durchführung des Ablaufs erforderlichen Algorithmen und dergleichen verwendet werden.

Bei besonders bevorzugten Ausführungsformen sind zusätzlich zu der beschriebenen ersten linear angeordneten Messgruppe aus Abgriffen a1 - a5 weitere Abgriffe a2^{*} - a5^{*}, a2', a3' auf der Oberfläche des Hall-Sensor-Elements S zum Ausbilden weiterer Messgruppen angeordnet. Insbesondere wird eine zweite, orthogonal zur ersten Messgruppe ausgerichtete Messgruppe aus Abgriffen a1, a2^{*} - a5^{*} bereitgestellt. Mit Hilfe der beiden zueinander orthogonal auf der Oberfläche des Hall-Sensor-Elements S angeordneten Messgruppen ist es mit entsprechender Beschaltung möglich, Magnetfelder B auch bezüglich der räumlichen Ausrichtung innerhalb der Ebene des Hall-Sensor-Elements S zu bestimmen.

Zusätzlich oder alternativ zu der zweiten Messgruppe, die orthogonal zu der ersten Messgruppe angeordnet ist, können weitere Abgriffe a2', a3' zur Ausbildung weiterer Messgruppen unter einem Winkel α≠ 90° auf der Oberfläche des Hall-Sensor-Elements S angeordnet werden. Zweckmäßigerweise werden die einzelnen Abgriffe auf konzentrischen Bahnen d1, d2 um den ersten, zentralen Abgriff a1 herum angeordnet.

Die Beschaltung und der Stromverlauf des Hall-Sensor-Elements S bei den beiden Messanordnungen ist anschaulich anhand der Fig. 2A - 2D dargestellt. Wie dies aus dem Ersatzschaubild der Fig. 2A ersichtlich ist, sind Abgriffe a1, a3, a4 und a2 auf der Oberfläche des Hall-Sensor-Elements S angeordnet, um den Hall-Sensor-Strom I ein- und auszuleiten bzw. die Hall-Spannung abzugreifen. Das Material des Hall-Sensor-Elements zwischen den einzelnen Abgriffen a1 - a4 bildet für den hindurchgeleiteten Hall-Sensor-Strom I einen elektrischen Widerstand, der in dem Ersatzschaubild durch Widerstandselemente R1, R2, R3, R4 veranschaulicht ist. Durch den Zusammenschluss der beiden zweiten, außenseitigen Abgriffe a2, a5 wird eine Art Brückenschaltung gebildet, wie dies aus Fig. 2B anschaulich ersichtlich ist.

Bei der Brückenschaltung werden mit Hilfe der Steuereinrichtung C gemäß der ersten Messanordnung zu dem ersten Zeitpunkt t1 der Hall-Sensor-Strom I an dem ersten und zweiten Abgriff a1, a2 ein- bzw. ausgespeist und die erste Hall-Spannung Uh1 an dem dritten und dem vierten Abgriff a3, a4 abgegriffen. Je nach Stromflussrichtung ergibt sich für den Stromfluss in der Brückenschaltung die in den Fig. 2B bzw. 2D dargestellte Stromflusssituation. Bei der Beschaltung gemäß der zweiten Messanordnung zu dem zweiten Zeitpunkt t2 speist die Steuereinrichtung C den Hall-Sensor-Strom I über den dritten und den vierten Abgriff a3, a4 ein bzw. aus und greift die zweite Hall-Spannung Uh2 über den ersten und den zweiten Abgriff a1, a2 ab. Je nach Stromflussrichtung ergeben sich die beiden in den Fig. 2C, 2E dargestellten Stromflüsse innerhalb der Brückenanordnung bzw. entsprechend innerhalb von dem Hall-Sensor-Element S.

Die derart bestimmten verschiedenen Hall-Spannungen Uh1 und Uh2 aus den beiden Messungen zu dem ersten und dem zweiten Zeitpunkt t1, t2 werden in der Steuereinrichtung C aufaddiert, wodurch sich eine doppelte Offset-kompensierte Hall-Spannung ergibt, deren Wert optional durch zwei dividiert wird. Durch Subtraktion der beiden derart bestimmten Offset-behafteten Hall-Spannungen Uh1, Uh2 voneinander wird die Offset-Spannung Uh,offset bestimmt.

Prinzipiell reicht eine Beschaltung zu einem ersten Zeitpunkt t1 mit der ersten Messanordnung und zu einem zweiten Zeitpunkt t2 mit der zweiten Messanordnung zur Bestimmung einer Offset-kompensierten Hall-Spannung Uh aus. Wie aus den Stromflussdarstellungen der Fig. 2B - 2C ersichtlich ist, werden dabei jedoch einzelne der Widerstandsbereiche nur in jeweils einer Stromrichtung vom Hall-Sensor-Strom durchlaufen. Daher ist eine Wiederholung der Messung in der ersten und in der zweiten Messanordnung zu weiteren Zeitpunkten t3, t4 zur Bestimmung noch weiterer Offsetbehafteter Hall-Spannungen Uh3, Uh4 mit umgekehrter Stromflussrichtung vorteilhaft. Letztendlich werden dann vier Offset-behaftete Hall-Spannungswerte Uh1 - Uh4 zur Ermittlung einer Offset-freien Hall-Spannung Uh aufaddiert und durch vier dividiert.

Fig. 2B stellt dabei den Stromfluss des Hall-Sensor-Stroms I von dem ersten Abgriff a1 zum zweiten bzw. zu den zweiten Abgriffen a2 dar. Alle Widerstandselemente R1 - R4 werden in der Darstellung in der gleichen Richtung von oben nach unten durchströmt. Durch die Verwendung der zweiten Messanordnung zu dem zweiten Zeitpunkt t2 (Fig. 2C) fließt der Hall-Sensor-Strom ausgehend von dem dritten Abgriff a3 zu dem vierten Abgriff a4, wobei die Widerstandselemente R1 und R3 wiederum von oben nach unten, d. h. in gleicher Richtung wie zum ersten Zeitpunkt t1 durchströmt werden, während die übrigen Widerstandselemente R2, R4 in entgegengesetzter Richtung durchströmt werden. Wie dies aus Fig. 2D ersichtlich ist, wird zu dem dritten Zeitpunkt t3 die erste Messanordnung mit jedoch umgekehrter Strömungsrichtung des Hall-Sensor-Stroms I verwendet. Entsprechend werden alle Widerstandselemente R1 - R4 im Vergleich zum ersten Zeitpunkt t1 in umgekehrter Richtung vom Hall-Sensor-Strom durchströmt. Fig. 2E stellt eine Messung zum vierten Zeitpunkt t4 mit der zweiten Messanordnung dar, wobei der Stromfluss entsprechend in umgekehrter Richtung verläuft. Im Vergleich zur Messung zum zweiten Zeitpunkt t2 mit der zweiten Messanordnung werden die einzelnen Widerstandselemente nun in umgekehrter Richtung vom Hall-Sensor-Strom I durchströmt. Durch die Bestimmung der vier derart Offset-behafteten Hall-Spannungen Uh1 - Uh4 gehen somit in die Addition Messergebnisse ein, die einen Stromfluss des Hall-Sensor-Stroms I/2 durch jedes der Widerstandselemente R1 - R4 berücksichtigen, und zwar jeweils zwei Mal in jeweils zwei Richtungen.

Wie dies aus der vorstehenden Beschreibung ersichtlich ist, besteht ein Grundgedanke darin, eine vertikale Brückenstruktur (Fig. 2A) zu bilden, deren Offset-Fehler durch eine Chopper-Technik eliminiert wird. Im Gegensatz zur für sich bekannten Chopper-Technik, bei welcher ein Hall-Sensor-Strom I durch einen Abgriff a1 ein- und durch einen anderen Abgriff a2 ausgeleitet wird, um in einem nachfolgenden Schritt die Stromflussrichtung umzupolen, wird bei den vorliegenden Ausführungsbeispielen die Ein- und Ausleitung des Hall-Sensor-Stroms I durch eine räumliche Versetzung zu anderen Abgriffen a3, a4 durchgeführt. Im Wesentlichen wird dabei zumindest einer der beiden Abgriffe zum Ein- oder Ausleiten des Hall-Sensor-Stroms I auf eine Position gesetzt, welche bei der zuvor verwendeten Messanordnung nicht für den Stromfluss des Hall-Sensor-Stroms I verwendet wurde. Vorzugsweise wird die Einspeisung und die Ausspeisung des Hall-Sensor-Stroms I jedoch über die in einem ersten Zeitpunkt t1 zum Abgreifen der Hall-Spannung Uh1 verwendeten Abgriffe a3, a4 durchgeführt, während die Hall-Spannung Uh2 zu dem zweiten Zeitpunkt t2 über die Abgriffe a1, a2 gemessen wird, welche zum ersten Messzeitpunkt t1 zum Ein- und Ausspeisen des Hall-Sensor-Stroms I verwendet wurden. Gemäß der Ausführungsform mit vier verschiedenen Messbedingungen werden zwei Messungen mit der ersten Messanordnung und zwei Messungen mit der zweiten Messanordnung bei jeweils positiver und negativer Stromflussrichtung des Hall-Sensor-Stroms I durchgeführt.

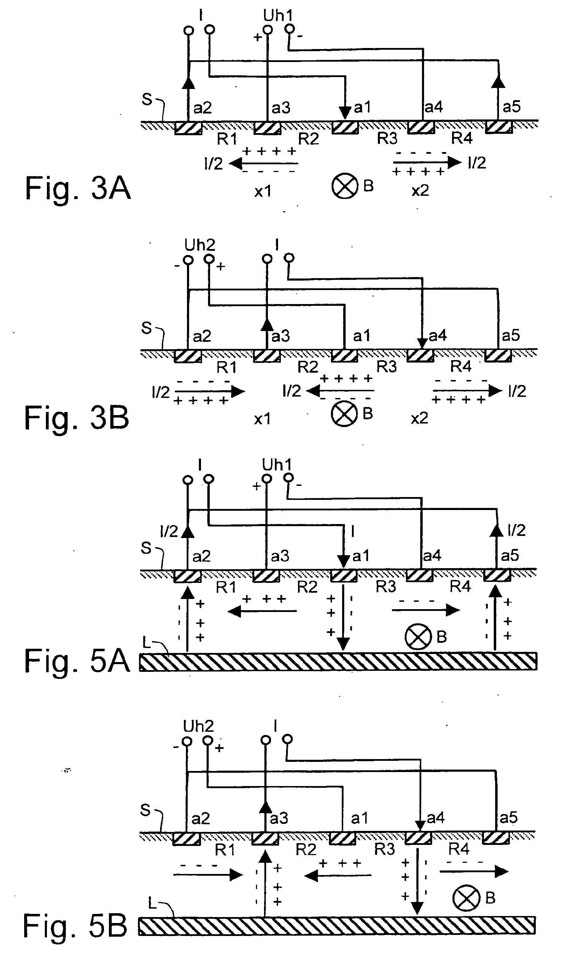

Anhand der Fig. 3A und 3B sind die Stromfluss- und Polarisationsbedingungen in der Schnittdarstellung durch das Hall-Sensor-Element S für die erste und die zweite Messanordnung dargestellt. Das Hall-Sensor-Element S ist vorzugsweise ein Halbleiterkristall, z. B. n-dotiertes Silizium, in welches der Hall-Sensor-Strom I über den ersten Abgriff a1 eingespeist wird. In der Darstellung links bzw. rechts von dem Einspeisungspunkt wird der eingeleitete Hall-Sensor-Strom I jeweils hälftig wieder aufgefangen und über einen zweiten und einen weiteren zweiten bzw. fünften Abgriff a2, a5 mit einem Abstand x1 bzw. x2 vom ersten Abgriff a1 wieder abgeleitet. Der Anteil des Magnetfelds B, welcher senkrecht zum Stromfluss durch die Chipebene bzw. Ebene des Hall-Sensor-Elements S verläuft, induziert in Zusammenwirkung mit dem Hall-Sensor-Strom I/2 eine Hall-Spannung Uh1, die sowohl senkrecht zum Magnetfeld B als auch senkrecht zum Stromfluss I/2 anliegt. Im Fall der bevorzugten vertikalen Sensoren a1 a5 verläuft das Hall-Feld in vertikaler Richtung zur Oberfläche des Hall-Sensor-Elements S. Dadurch entsteht im Oberflächenbereich zwischen dem ersten Abgriff a1 und dem in der Darstellung linksseitigen zweiten Abgriff a2 ein positives Hall-Potential, während auf der in der Darstellung rechten Seite zwischen dem ersten Abgriff a1 und dem weiteren zweiten bzw. fünften Abgriff a5 entsprechend den verschiedenen Stromflussrichtungen ein negatives Hall-Potential entsteht. Liegen beide Messpunkte für die Hall-Spannung Uh1, d. h. der dritte und der vierte Abgriff a3, a4 exakt auf gleichem Potential, nämlich dann, wenn das Magnetfeld B oder der Stromfluss I gleich null ist, dann ist die Hall-Spannung zwischen den Messpunkten a3, a4 ebenfalls null. Sobald ein Magnetfeld B senkrecht zur Stromrichtung I/2 in der Ebene des Hall-Sensor-Elements S auftritt, wird die messbare Hall-Spannung Uh1 ungleich null. Diese Spannung ist die durch das Magnetfeld B in Zusammenwirkung mit dem Stromfluss I/2 erzeugte Hall-Spannung Uh1.

Die Materialbereiche des Hall-Sensor-Elements S zwischen den einzelnen Abgriffen a2 - a3, a3 - a1, a1 - a4, a4 - a5/a2 stellen für den Hall-Sensor-Strom I zu durchfließende Widerstandsbereiche dar, wobei diese den in den Ersatzschaltbildern der Fig. 2 dargestellten Widerstandselementen R1 - R4 entsprechen. Diese Brücke aus Widerstandselementen bzw. Widerstandsbereichen R1 - R4 weist erhebliche Offset-Fehler auf, da die Widerstandswerte R1 - R4 üblicherweise nicht gleich groß sind. Ursachen für solche Ungleichheiten sind Justierfehler, unterschiedliche Kontaktwiderstände, mechanischer Stress durch den Einbau des Hall-Sensor-Elements S in einen Rahmen und dergleichen sowie Geometriefehler.

Bei den vorliegenden Ausführungsbeispielen wird die Tatsache ausgenutzt, dass eine Brücke die Eigenschaft hat, dass der Betrag der Offset-Fehler bei konstanten linearen Widerständen gleich ist, und zwar unabhängig davon, ob der Hall-Sensor-Strom I zwischen dem ersten und den zweiten Abgriffen a1, a2 oder zwischen dem dritten und dem vierten Abgriff a3, a4 fließt. Angenommen, an den ersten Abgriff a1 wird eine positive Spannung angelegt und ein Strom eingespeist, wobei der Widerstandswert R2 zwischen dem ersten und dritten Abgriff a1, a3 kleiner als der Widerstandswert R3 zwischen erstem und vierten Abgriff a1, a4 sein soll, dann entsteht an den Messpunkten für die Hall-Spannung Uh1, d. h. über dem dritten und vierten Abgriff a3, a4 ein positiver Offset und eine positive Hall-Spannung U(a3, a4) = Uh1 = Uhall + Uh,offset.

Fließt nun der Hall-Sensor-Strom I vom vierten Abgriff a4 zum dritten Abgriff a3, wie dies in Fig. 3B dargestellt ist, dann entsteht an dem ersten und den zusammengeschlossenen zweiten Abgriffen a1, a2, a5 eine negative Offset-Spannung, dies aber bei einer positiven Hall-Spannung, also U(a1, a2) = Uh2 = Uhall - Uh,offset.

Werden beide Messungen in zeitlicher Abfolge t1, t2 durchgeführt und die gemessenen Hall-Spannungen Uh1, Uh2 anschließend addiert, so ergibt dies die doppelte tatsächliche und Offset-freie Hall-Spannung 2^{*}Uhall = Uh1 + Uh2. Dadurch wird der Brücken-Offset eliminiert. Durch eine Subtraktion der gemessenen und Offset-behafteten Hall-Spannungen Uh1, Uh2 wird die doppelte Offset-Spannung 2^{*} Uh,offset = Uh1 - Uh2 bestimmt. Bei dieser Vorgehensweise wird die Polarität der Hall-Spannung durch Umschalten der Brücke zwischen der ersten und der zweiten Messanordnung nicht verändert, wohl aber der Offset. Die Hall-Spannungen Uh1, Uh2 beider Messungen können auch unterschiedlich sein, solange nur der Offset kompensiert werden soll.

Die Bedingungen zur Kompensation des Offsets lassen sich einfach herleiten. Unter der Annahme, dass an den ersten und die zweiten Abgriffe a1, a2 eine Spannung Ua12 angelegt wird, fließt ein Strom Ia12 = Ua12/(R2 + R1) und ein Strom Ia15 = Ua12/(R3 + R4). Unter der Voraussetzung, dass alle Widerstände R1 - R4 gleich sind, gilt Ia1 = Ia12 + Ia15 und Ia12 = Ia15, so dass für die Brückenspannung Uh1 zwischen dem dritten und dem vierten Abgriff a3, a4 kein Offset vorliegt und diese gleich der tatsächlichen Hall-Spannung Uh ist. Die Hall-Spannung Uh ist dabei positiv am dritten Abgriff a3 gegenüber dem vierten Abgriff a4. Falls ein ungleicher Widerstandswert vorliegt, beispielsweise der erste Widerstandabschnitt einen kleineren Widerstandswert als der zweite Widerstandsabschnitt aufweist, so ist das Potential am dritten Abgriff a3 niedriger als am vierten Abgriff a4. Es entsteht ein Brückenoffset über den dritten und vierten Abgriff a3, a4 von Uoffset1 = Ia12/(R1 - R2). Dadurch ergibt sich eine Offset-behaftete Spannung Uh1 = Uh + Uoffset1.

Beim Anlegen einer Spannung Ua34 an den dritten und den vierten Abgriff a3, a4, um zwischen diesen den Strom I = 145 = I42 fließen zu lassen, bestimmt sich der Strom zu I42 = U34/(R4 + R1) = U34/(R3 + R2) mit I4 = I45 + I43 und 13 = I23 + I43. Dabei geben die beiden Zahlen hinter dem Buchstaben I jeweils die Nummern der Abgriffe an, zwischen denen der Stromfluss zu verzeichnen ist. Entsprechendes gilt für die Zahlen hinter dem Großbuchstaben U. An dem dritten und vierten Abgriff a3, a4 entsteht bei gleichbleibendem Magnetfeld B eine positive Hall-Spannung U12 = Uh2. Ist nun der Widerstandswert des ersten Widerstandsabschnitts R1 wie vorstehend kleiner als der Wert des zweiten Widerstandsabschnitts R2, so ist das Potential am zweiten Abgriff a2 niedriger als am ersten Abgriff a1. Zwischen diesen Abgriffen entsteht ein Brückenoffset von Uoffset2 = Ia43/(R2 - R1) und damit eine Spannung Uh2 = Uoffset2 + Uh.

Werden nun beide bestimmten und Offset-behafteten Spannungswerte Uh1, Uh2 addiert, so entsteht, wenn beide Ströme Ia43 und Ia12 gleich groß sind, eine Hall-Spannung Uh = Ua15 + Ua34 = 2^{*}Uh + Uoffset1 Uoffset2 = 2^{*}Uh. Um dies zu erzielen, ist eine möglichst genaue Stromeinspeisung und Spannungseinspeisung in die Brücke vorzunehmen.

Durch eine Berechnung einer Widerstandsbrücke ergibt sich, dass der Offset gleich ist, solange in beiden Messungen die Widerstands- und Stromverhältnisse sich nicht ändern. Beeinflusst werden kann die Kompensation, wenn die Messimpedanz an der Brücke nicht beachtet wird. Dabei gilt die Regel, dass bei Stromeinspeisung die Messimpedanz hoch und bei Spannungseinspeisung niedrig sein sollte.

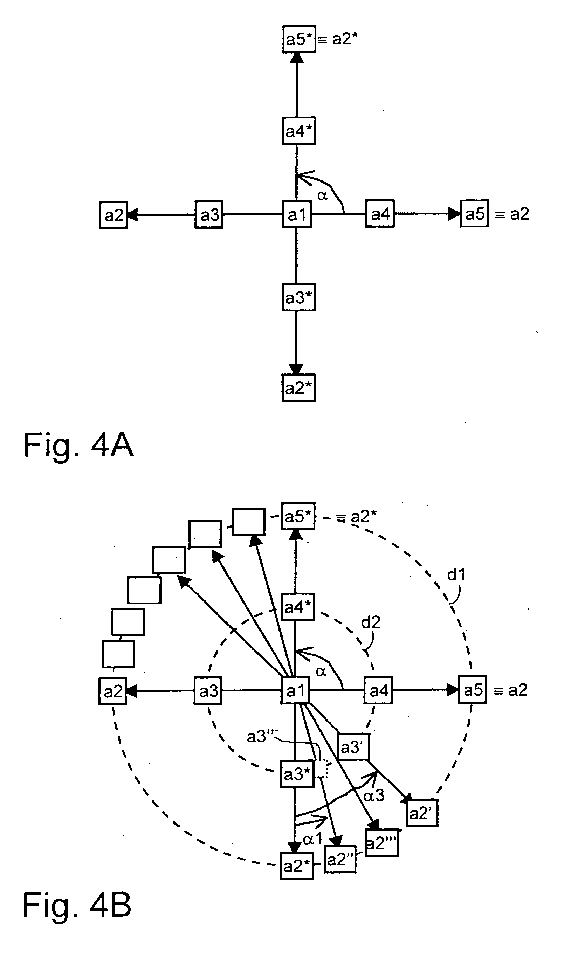

Fig. 4A stellt eine kreuzweise Anordnung von Abgriffen auf der Oberfläche des Hall-Sensor-Elements S dar. Durch diese Anordnung werden zwei linear um einen zentralen Abgriff a1 gebildete Messgruppen aus einer ersten linearen Abgriffanordnung a1 - a5 und einer dazu orthogonal unter dem Winkel α = 90° angeordneten zweiten Messgruppe mit den linear angeordneten Abgriffen a2^{*} - a5^{*}, a1 ausgebildet. Damit können Magnetfeldvektoren B in der Ebene des Hall-Sensor-Elements bestimmt werden, welche nicht orthogonal zu einer der beiden Messgruppen verlaufen. Insbesondere ist eine solche Anordnung auch für Drehwinkelmessungen geeignet. Mit einer derartigen vertikalen Hall-Abgriff-Struktur können Magnetfeldvektoren des Magnetfelds B in der Ebene des Hall-Sensor-Elements S bzw. der Chipebene ausgemessen werden, indem ein polar aufgebautes Array durch einen Scan-Vorgang die maximale Hall-Spannung ermittelt. Insbesondere können mit Hilfe von Kontakten senkrecht zum Stromfluss an der Chipoberfläche auch Messungen eines Magnetflusses senkrecht zur Oberfläche des Hall-Sensor-Elements S ermittelt werden, um somit mit einem einzigen Bauelement drei Hauptvektoren eines Magnetflusses festzustellen.

Mit Blick auf eine Reduzierung eines Rechenaufwandes in der Steuereinrichtung C des Sensors 1 oder einer externen Steuereinrichtung, welcher die Hall-Spannungen Uh1, Uh2, Uh zugeführt werden, kann auch eine Vielzahl weiterer Abgriffe a3', a2', a2'', a2''' auf der Oberfläche des Hall-Sensor-Elements S angeordnet werden. Diese weiteren Abgriffe werden vorteilhafterweise auf konzentrischen Bahnen d1, d2 um den zentralen ersten Abgriff a1 herum angeordnet. Wie dies aus der Darstellung ersichtlich ist, ist es dabei auch möglich, auf der vom zentralen ersten Abgriff a1 entfernten Bahn d1 eine größere Anzahl von zweiten Abgriffen a2^{*}, a2', a2'', a2"' anzuordnen als auf der zum zentralen ersten Abgriff a1 näher liegenden Bahn d2. Eine solche Anordnung ist beispielsweise dann vorteilhaft, wenn aus räumlichen Gründen eine Platzierung von einer gleich großen Anzahl von Kontaktpunkten auf der innenliegenden zweiten Bahn d2 nicht möglich oder messtechnisch oder mit Blick auf Störeinflüsse durch die Größe der erforderlichen Kontaktpunkte nicht sinnvoll ist. In diesem Fall kann dann vorteilhafterweise bei der Bestimmung eines unter einem Ausrichtungswinkel α1 fehlenden Abgriffs a3 ' ' ⁻ eine Interpolation der Werte mehrerer Messungen vorgenommen werden, die mit den einzelnen Abgriffen a2^{*}, a2", a2''', a2' auf der äußeren Bahn d1 und den vorhandenen Abgriffen a3^{*}, a3' auf der innenliegenden Bahn d2 durchgeführt wurden.

Insbesondere soweit mehrere Messgruppen auf der Oberfläche angeordnet sind, ist es möglich, Hall-Spannungen zur Bestimmung eines Magnetfelds B einschließlich dessen Winkelverlauf durch das Hall-Sensor-Element S mit verschiedenen einzelnen Messungen für jede einzelne Messgruppe aber auch mit einer gemeinsamen Messung für mehrere Messgruppen zugleich durchzuführen. In letzterem Fall wird beispielsweise durch den zentralen Abgriff a1 ein Hall-Sensor-Strom eingespeist und durch mehrere oder alle der außenliegenden zweiten Abgriffe a2, a2^{*}, a5, a5^{*} abgeleitet. Entsprechend werden auch Hall-Spannungen in mehreren Richtungen zugleich abgegriffen.

Soweit Berechnungen durchgeführt werden, können diese sowohl durch logische Verknüpfungseinrichtungen als Bestandteil einer integralen Halbleiteranordnung in der Steuereinrichtung C als auch durch eine Recheneinrichtung innerhalb der Steuereinrichtung C oder in einer externen Recheneinrichtung durchgeführt werden.

Hervorzuheben ist die Verwendung eines vertikalen Hall-Sensors 1, bei welchem die vertikal entstehende Hall-Spannung gemessen wird, die durch einen Stromfluss des Hall-Sensor-Stroms I in einem Halbleiterkristall S und einem Magnetfluss B in der Ebene der Kristalloberfläche induziert wird, wobei durch das Versetzen, insbesondere Vertauschen der Messpunkte der Stromeinspeispunkte und der Spannungsabgriffpunkte zwei unabhängige Messungen durchgeführt werden. Durch Addition oder Subtraktion der beiden Messergebnisse werden dann entsprechend die Offset-Spannung oder die Hall-Spannung eliminiert.

Vorteilhafterweise ist eine solche Anordnung durch eine Brücke beschreibbar, welche rotationssymmetrisch aufgebaut ist, d. h., die Brücke besteht aus gleich großen Widerstandsbereichen. In einer solchen Anordnung wird die vertikale Hall-Spannung vorteilhafterweise stromlos gemessen. Mit einer kreuzweise angeordneten Struktur können auch zwei orthogonale Magnetfeldvektoren ermittelt werden, die eine Bestimmung eines Drehwinkels des Magnetfelds ermöglichen. Gemäß besonders bevorzugter Ausführungsform werden die Stromrichtungen der Anordnung inkremental um kleine Winkel α1, α2, α3 gedreht, um die Richtung des Magnetfeldvektors B in der Ebene des Hall-Sensor-Elements S durch einfache Intensitätsvergleiche zu bestimmen. Zusätzlich kann an senkrecht zu einem Stromfluss an der Oberfläche angebrachten Messpunkten das Hall-Potential abgegriffen werden, um auch einen Magnetfluss senkrecht zur Chipoberfläche zu erfassen.

Die zeitlichen Abstände der einzelnen Messungen sollten so gewählt werden, dass innerhalb eines Messzyklus keine zu große Variation des Magnetfelds B zu erwarten ist.

Die Fig. 5A und 5B zeigen im Wesentlichen die Elemente der Fig. 3A und 3B, weshalb zur Vereinfachung lediglich Unterschiede beschrieben werden. Das dargestellte Hall-Sensor-Element S sitzt auf einem Träger L, welcher aus einem vorzugsweise niederohmigen Material besteht. Die Widerstandsbereiche R1 - R4 werden dabei von einem Stromfluss mit zwei Komponenten, einer vertikalen und einer lateralen Stromkomponente durchströmt. Dabei sind entsprechend in den beiden Chopper-Phasen nicht mehr die gleichen Widerstandsbereiche in der Brückenschaltung Strom durchflossen. Dadurch werden bei einer derartigen Konfiguration ggfs. schlechtere Offset-Kompensationen erreicht, ein Mindestmaß an Offset-Kompensation wird jedoch noch erzielt. Je leitfähiger die Trägerschicht L ist, desto stärker wird die Verschlechterung, so dass ein rückseitiger Kurzschluss durch das Aufbringen eines hochleitfähigen Materials bei den bevorzugten Ausführungsformen vermieden wird. Für den Fall einer erforderlichen derartigen Trägerschicht L wird entsprechend ein hochohmiges Material bevorzugt, welches beispielsweise aus einem Oxid oder einem in Sperrrichtung betriebenen PN-Übergang besteht.

## Patentansprüche

1. Verfahren zum Bestimmen einer Offset-reduzierten Hall-Spannung (Uh) und/oder einer Offset-Spannung (Uh,offset) eines Hall-Sensors (1) mit den Schritten:
- Anlegen eines Hall-Sensor-Stroms (I) an einen ersten und an zweiten Abgriffe (a1, a2, a5) des Hall-Sensors (1) und Bestimmen einer ersten Hall-Spannung (Uh1) an zu den ersten und zweiten Abgriffen (a1, a2, a5) beabstandeten dritten und vierten Abgriffen (a3, a4),
- Anlegen eines demgegenüber veränderten zweiten Hall-Sensor-Stroms und Bestimmen einer zweiten Hall-Spannung (Uh2) und
- Ermitteln der Hall-Spannung (Uh) und/oder des Hall-Spannungs-Offsets (Uh,offset) aus der ersten und der zweiten bestimmten Hall-Spannung (Uh1, Uh2),
**dadurch gekennzeichnet, dass**
- das Anlegen des zweiten Hall-Sensor-Stroms I an räumlich zu den ersten und/oder zweiten Abgriffen versetzten Abgriffen (a3, a4) durchgeführt wird.

2. Verfahren nach Anspruch 1, bei dem die zweite Hall-Spannung (Uh2) an räumlich gegenüber den Abgriffen (a3, a4) für die Bestimmung der ersten Hall-Spannung (Uh1) versetzten Abgriffen (a1, a2) durchgeführt wird.

3. Verfahren nach Anspruch 1 oder 2, bei dem zum Bestimmen der zweiten Hall-Spannung (Uh2) diese an den Abgriffen (a1, a2) zum Anlegen des ersten Hall-Stroms (I) abgegriffen wird und der zweite Hall-Sensor-Strom (I) an den Abgriffen zum Abgreifen der ersten Hall-Spannung (Uh1) angelegt wird.

4. Verfahren nach einem der Ansprüche 1 - 3, bei dem die kompensierte Hall-Spannung (Uh) durch Addition der ersten und der zweiten Hall-Spannung (Uh1, Uh2) ermittelt wird.

5. Verfahren nach einem der vorstehenden Ansprüche, bei dem der Hall-Spannungs-Offset (Uh,offset) durch Subtraktion der ersten und der zweiten Hall-Spannung (Uh1, Uh2) ermittelt wird.

6. Verfahren nach einem der vorstehenden Ansprüche, bei dem zum Bestimmen einer Winkelkomponente des Magnetfelds (B) eine reduzierte Hall-Spannung (Uh) mit einer ersten linearen Anordnung von ersten bis fünften Abgriffen (a1 - a5) bestimmt wird und mit einer zweiten linearen Anordnung von Abgriffen (a1, a2^{*} - a5^{*}) in nicht linearer und unter einem Winkel zur ersten Anordnung angeordneten Anordnung eine weitere reduzierte Hall-Spannung bestimmt wird.

7. Verfahren nach einem der vorstehenden Ansprüche, bei dem bei Verwendung von räumlich nicht linear angeordneten Abgriffen eine Interpolation von Zwischenergebnissen durchgeführt wird.

8. Offset-reduzierter Hall-Sensor (1) mit
- Abgriffen (a1 - a5) zum Abgreifen oder Anlegen von Spannungen und/oder Strömen und
- einer Steuereinrichtung (C) zum Anlegen eines ersten Hall-Sensor-Stroms (I) über einen ersten, insbesondere zentralen Abgriff (a1) und zwei dazu in im Wesentlichen beabstandete zweite Abgriffe (a2, a5) und zum Bestimmen einer ersten Hall-Spannung (U1) beiderseits des ersten Abgriffs (a1) zwischen einem dritten und einem vierten Abgriff (a3, a4), die zwischen dem ersten Abgriff (a1) und den zweiten Abgriffen (a2, a5) angeordnet sind, in einer ersten Messanordnung (t1),
**dadurch gekennzeichnet, dass**
- die Steuereinrichtung (C) eine Schalteinrichtung (C) zum Anlegen eines zweiten Hall-Sensor-Stroms oder des Hall-Sensor-Stroms (I) an gegenüber dem ersten, zweiten und weiteren zweiten Abgriff (a1, a2, a5) räumlich versetzten Abgriffen (a3, a4) und zum Abgreifen einer zweiten Hall-Spannung (Uh2) an gegenüber den dritten und vierten Abgriffen (a3, a4) räumlich versetzten Abgriffen (a1, a2) in einer zweiten Messanordnung (t2) aufweist.

9. Hall-Sensor nach Anspruch 8, bei dem die Steuereinrichtung (C) eine Schalteinrichtung (C) zum Anlegen eines zweiten Hall-Sensor-Stroms (I) an den dritten und vierten Abgriff (a3, a4) und zum Abgreifen einer zweiten Hall-Spannung (Uh2) zwischen dem ersten und dem zweiten bzw. weiteren zweiten Abgriff (a1, a2, a5) in einer zweiten Messanordnung (t2) aufweist.

10. Hall-Sensor nach Anspruch 8 oder 9, bei dem der zweite und der weitere zweite Abgriff (a2, a5) an einem gemeinsamen Anschluss zum Anlegen des Hall-Sensor-Stroms (I) oder zum Abgreifen der Hall-Spannung (Uh2) angeschlossen sind.

11. Hall-Sensor nach einem der Ansprüche 8 - 10
- mit einer Speichereinrichtung (M) zum Speichern der ersten und/oder der zweiten Hall-Spannung (Uh1; Uh2) und
- mit einer Auswerteeinrichtung (C) zum Bestimmen einer Offset-kompensierten Hall-Spannung (Uh) aus zu den Bedingungen der verschiedenen Messanordnungen (t1, t2) abgegriffenen Hall-Spannungen (Uh1, Uh2).

12. Hall-Sensor nach einem der Ansprüche 8 - 11, bei dem die Abgriffe (a1 - a5) in einer durch die Flussrichtung des Hall-Sensor-Stroms (I) und eines zu detektierenden Magnetfelds (B) aufgespannten Ebene oder einer dazu parallelen Ebene in Art eines Vertikal-Hall-Sensors angeordnet sind.

13. Hall-Sensor nach Anspruch 12, bei dem
- eine erste Messgruppe mit zueinander linear angeordneten ersten bis vierten Abgriffen (a1 - a5) eine erste Messanordnung und eine zweite Messanordnung ausbildet und
- eine zweite Messgruppe eine erste und eine zweite Messanordnung erster bis vierter Abgriffe (a1, a2* - a5*), die zueinander linear und zu der ersten Messgruppe (a1 - a5) in der Ebene um einen Winkel (α) verschwenkt angeordnet sind, ausbildet.

14. Hall-Sensor nach Anspruch 12 oder 13, bei dem
- von dem ersten Abgriff (a1) beabstandet eine Vielzahl zweiter Abgriffe (a2, a2*, a2', a5, a5*, a5') auf einer kreisförmigen ersten Bahn (d1) verteilt angeordnet sind und
- von dem ersten Abgriff (a1) beabstandet eine Vielzahl dritter Abgriffe (a3, a3*) und vierter Abgriffe (a4, a4*) auf einer zweiten kreisförmigen Bahn (d2) angeordnet sind, wobei die ersten Bahn (d1) von dem ersten Abgriff (a1) weiter entfernt ist als die zweite Bahn (d2).

15. Hall-Sensor nach Anspruch 14, bei dem
- die Anzahl der Abgriffe (a2, a2*, a2' , a5, a5*, a5' ) auf der ersten Bahn (d1) größer ist als die Anzahl der Abgriffe (a3, a3*, a4, a4*) auf der zweiten Bahn (d2) und
- eine Auswerteeinrichtung (C) zum Ermitteln von Zwischenpositionswerten für weitere Positionen auf der zweiten Bahn (d2) ohne einen verfügbaren Abgriff (a3"⁻) ausgebildet ist.

## Claims

1. Method for determining an offset-reduced Hall voltage (Uh) and/or an offset voltage (Uh, offset) of a Hall sensor (1), with the following steps:
- applying a Hall sensor current (I) at a first and at second taps (a1, a2, a5) of the Hall sensor (1), and determining a first Hall voltage (Uh1) at third and fourth taps (a3, a4) that are set at a distance from the first and second taps (a1, a2, a5),
- applying a second Hall sensor current modified relative to the first, and determining a second Hall voltage (Uh2), and
- determining the Hall voltage (Uh) and/or Hall voltage offset (Uh, offset) from the first and second determined Hall voltages (Uh1, Uh2),
**characterised in that**
- the application of the second Hall current I is effected at taps (a3, a4) that are spatially offset relative to the first and/or second taps.

2. Method according to claim 1, wherein the second Hall voltage (Uh2) is effected at taps (a1, a2) that are spatially offset relative to the taps (a3, a4) for determining the first Hall voltage (Uh1).

3. Method according to claim 1 or 2, wherein in order to determine the second Hall voltage (Uh2), this voltage is tapped at the taps (a1, a2) for the application of the first Hall current (I), and the second Hall sensor current (I) is applied at the taps for tapping the first Hall voltage (Uh1).

4. Method according to one of the claims 1 to 3, wherein the compensated Hall voltage (Uh) is determined by the addition of the first and second Hall voltages (Uh1, Uh2).

5. Method according to one of the preceding claims, wherein the Hall voltage offset (Uh, offset) is determined by the subtraction of the first and second Hall voltages (Uh1 Uh2).

6. Method according to one of the preceding claims, wherein in order to determine an angular component of the magnetic field (B), a reduced Hall voltage (Uh) is determined with a first linear arrangement of the first to the fifth taps (a1-a5), and an additional reduced Hall voltage is determined with a second linear arrangement of taps (a1, a2*-a5*) in an arrangement which is non-linear and oriented at an angle relative to the first arrangement.

7. Method according to one of the preceding claims, wherein an interpolation of intermediate results is performed using taps arranged in a spatially non-linear configuration.

8. Offset-reduced Hall sensor (1), with:
- taps (a1-a5) to tap or apply voltages and/or currents, and
- a control device (C) for applying a first Hall sensor current (I) via a first - in particular central - tap (a1), and two second taps (a2, a5) essentially set at a distance relative to that, and for determining a first Hall voltage (LJ1) on both sides of the first tap (a1) between a third and fourth tap (a3, a4) which are located between the first tap (a1) and second taps (a2, a5), in a first measurement system (t1),
**characterised in that**
the control device (C) has a switching device (C) for applying a second Hall sensor current or the Hall sensor current (I) at taps (a3, a4) that are spatially offset relative to the first, second and additional second taps (a1, a2, a5), and for tapping a second Hall voltage (Uh2) at taps (a1, a2) that are spatially offset relative to the third and fourth taps (a3, a4), in a second measurement system (t2).

9. Hall sensor according to claim 8, wherein the control device (C) has a switching device (C) for applying a second Hall sensor current (I) at the third and fourth taps (a3, a4), and for tapping a second Hall voltage (Uh2) between the first and second or additional second taps (a1, a2, a5), in a second measurement system (t2).

10. Hall sensor according to claim 8 or 9, wherein the second and the additional second taps (a2, a5) are connected to a common terminal, for applying the Hall sensor current (I) or for tapping the Hall voltage (Uh2).

11. Hall sensor according to one of the claims 8-10,
- with a memory device (M) for storing the first and/or second Hall voltage (Uh1; Uh2), and
- an analyser (C) for determining an offset-compensated Hall voltage (Uh) from the Hall voltages (Uh1, Uh2) that are tapped under the conditions of the various measurement systems (t1, t2).

12. Hall sensor according to one of the claims 8-11, wherein the taps (a1-a5) are located in a plane defmed by the flow direction of the Hall sensor current (I) and a magnetic field (B) that is to be detected, or in a plane parallel to that, in the manner of a vertical Hall sensor.

13. Hall sensor according to claim 12, wherein
- a first measurement group with first to fourth taps (a1-a5) arranged in a linear manner in relation to one another forms a first measurement system and a second measurement system, and
- a second measurement group forms a first and a second measurement system of the first to the fourth taps (a1, a2*-a5*) which are arranged in a linear manner in relation to one another and pivoted around an angle (α) relative to the first measurement group (a1-a5) within the plane.

14. Hall sensor according to claim 12 or 13, wherein
- a plurality of second taps (a2, a2*, a2', a5, a5*, a5') set at a distance from the first tap (a1) are distributed around a circular first track (d1), and
- a plurality of third taps (a3, a3*) and fourth taps (a4, a4*) set at a distance from the first tap (a1) are arranged on a second circular track (d2), wherein the first track (d1) is further distant from the first tap (a1) than the second track (d2).

15. Hall sensor according to claim 14, wherein
- the number of taps (a2, a2*, a2', a5, a5*, a5') on the first track (d1) is greater than the number of taps (a3, a3*, a4, a4*) on the second track (d2), and
- an analyser (C) is provided for determining intermediate position values for additional positions on the second track (d2) without an available tap (a3"⁻).

## Revendications

1. Procédé pour déterminer une tension de Hall à compensation de décalage (Uh) et/ou d'une tension de décalage (Uh, offset), d'un capteur Hall (1) comprenant les étapes suivantes :
- application d'un courant de détecteur Hall (I) à une première et à des secondes prises (a1, a2) du capteur Hall (1) et détermination d'une première tension Hall (Uh1) sur des troisième et quatrième prises (a3, a4) écartées de la première et des secondes prises (a1, a2, a5),
- application d'un second courant de détecteur Hall, modifié par rapport au précédent et détermination d'une seconde tension Hall (Uh2) et
- détermination de la tension Hall (Uh) et/ou du décalage de tension Hall (Uh, offset) à partir de la première et de la seconde tension Hall déterminées (Uh1, Uh2),
**caractérisé en ce qu'**
on applique le second courant de capteur Hall (I) à des prises (a3, a4) décalées dans l'espace par rapport à la première et/ou aux secondes prises.

2. Procédé selon la revendication 1,
selon lequel
on applique la seconde tension Hall (Uh2) à des prises (a1, a2) décalées dans l'espace par rapport aux prises (a3, a4) pour déterminer la première tension Hall (Uh1).

3. Procédé selon la revendication 1 ou 2,
selon lequel,
pour déterminer la seconde tension Hall (Uh2), on prend celle-ci aux prises (a1, a2) en appliquant le premier courant Hall (I) et on applique le second courant Hall (I) aux prises pour prélever la première tension Hall (Uh1).

4. Procédé selon l'une des revendications 1 à 3,
selon lequel
on détermine la tension Hall compensée (Uh) par l'addition de la première et de la seconde tension Hall (Uh1 ; Uh2).

5. Procédé selon l'une des revendications précédentes,
selon lequel
on détermine le décalage de la tension Hall (Uh, offset) par soustraction de la première et de la seconde tension Hall (Uh1 ; Uh2).

6. Procédé selon l'une des revendications précédentes,
selon lequel
pour déterminer une composante angulaire du champ magnétique (B) on détermine une tension Hall réduite (Uh) selon une première disposition linéaire de la première à la cinquième prise (a1-a5) et à l'aide d'une seconde disposition linéaire de prises (a1, a2*-a5*), d'une manière non linéaire et selon un angle par rapport à la première disposition, on détermine une autre tension Hall, réduite.

7. Procédé selon l'une des revendications précédentes,
selon lequel,
en utilisant des prises disposées de manière non linéaire dans l'espace, on effectue une interpolation des résultats intermédiaires.

8. Capteur Hall à décalage compensé (1) comportant :
- des prises (a1-a5) pour prélever ou appliquer des tensions et/ou des courants,
- une installation de commande (C) pour appliquer un premier courant de capteur Hall (I) par une première prise (a1) notamment une prise centrale et des secondes prises (a2, a5) écartées pratiquement de celle-ci et pour déterminer une première tension Hall (U1) de part et d'autre de la première prise (a1), entre une troisième prise et une quatrième prise (a3, a4), qui sont installées entre la première prise (a1) et les secondes prises (a2, a5), dans un premier disposition de mesure (t1)
**caractérisé en ce que**
l'installation de commande (C) comporte une installation de commutation (C) pour appliquer un second courant de capteur Hall ou le courant de capteur Hall (I) a des prises (a3, a4) décalées dans l'espace par rapport à la première, à la seconde et à d'autres prises (a1, a2, a5), et un second dispositif de mesure (t2) pour prélever une seconde tension Hall (Uh2) à des prises (a1, a2) décalées dans l'espace par rapport à la troisième et à la quatrième prise (a3, a4).

9. Capteur Hall selon la revendication 8,
selon lequel
l'installation de commande (C) comporte une installation de commutation (C) pour appliquer un second courant de capteur Hall (I) à la troisième et à la quatrième prise (a3, a4) et pour prélever une seconde tension Hall (Uh2) entre la première, la seconde ou d'autres secondes prises (a1, a2, a5) dans un second dispositif de mesure (t2).

10. Capteur Hall selon la revendication 8 ou 9,
selon lequel
la seconde prise et l'autre seconde prise (a2, a5) sont reliées à une borne commune pour appliquer le courant de capteur Hall (I) ou pour prélever la tension Hall (Uh2).

11. Capteur Hall selon l'une des revendications 8-10,
comprenant :
- une installation de mémoire (M) pour enregistrer la première et/ou la seconde tension Hall (Uh1, Uh2) et
- une installation d'exploitation (C) pour déterminer une tension Hall à compensation de décalage (Uh) à partir des tensions Hall (Uh1 ; Uh2) prélevées dans les conditions appliquées aux différents dispositifs de mesure (t1, t2).

12. Capteur Hall selon l'une des revendications 8-11,
selon lequel
les prises (a1-a5) sont disposées dans un plan sous-tendu par la direction de passage du courant de capteur Hall (I) et d'un champ magnétique (B) à détecter ou dans un plan parallèle comme une sorte de capteur Hall vertical.

13. Capteur Hall selon la revendication 12,
selon lequel
on a un premier groupe de mesures avec des première à quatrième prises (a1-a5) disposées de manière linéaire formant un premier dispositif de mesure et un second dispositif de mesure, et
- un second groupe de mesures comporte un premier et un second dispositif de mesure avec des première à quatrième prises (a1, a2*-a4*) disposées de manière linéaire en étant basculées par rapport au premier groupe de mesure (a1-a5) dans le plan suivant un angle (α).

14. Capteur Hall selon la revendication 12 ou 13,
selon lequel
plusieurs secondes prises (a2, a2*, a2', a5, a5*, a5') écartées de la première prise (a1) sont réparties sur une première trajectoire (d1) circulaire, et
un ensemble de troisièmes prises (a3, a3*) et de quatrième prise (a4, a4*) est installé de manière écartée de la première prise (a1) sur une seconde trajectoire circulaire (d2), et la première trajectoire (d1) est plus éloignée de la première prise (a1) que la seconde trajectoire (d2).

15. Capteur Hall selon la revendication 14,
selon lequel
le nombre de prises (a2, a2*, a2', a5, a5*, a5') sur la première trajectoire (d1) est supérieur au nombre de prises (a3, a3*, a4, a4*) sur la seconde trajectoire (d2), et
- une installation d'exploitation (C) est réalisée sans une prise disponible (a3") pour déterminer des valeurs de position intermédiaires pour d'autres positions sur la seconde trajectoire (d2).
